Europäisches Patentamt

European Patent Office

Office européen des brevets

(11) Publication number: **0 272 776**
**A2**

## (12) EUROPEAN PATENT APPLICATION

(21) Application number: **87309033.6**

(22) Date of filing: **13.10.87**

(51) Int. Cl.⁴: **H02M 7/527**

(30) Priority: **19.12.86 GB 8630426**

(43) Date of publication of application:
**29.06.88 Bulletin 88/26**

(84) Designated Contracting States:
**AT BE CH DE ES FR GB GR IT LI LU NL SE**

(71) Applicant: **GLENTRONIC LIMITED**
**Brewster Square Brucefield Industrial Park**
**Livingston, EH54 9BT Scotland(GB)**

(72) Inventor: **McAlpine, Thomas Millrig House**
**Millrig Road Wiston**
**Biggar Lanarkshire ML12 6HT(GB)**

(74) Representative: **McCallum, William Potter et al**
**Cruikshank & Fairweather 19 Royal**
**Exchange Square**
**Glasgow G1 3AE Scotland(GB)**

(54) **Three-phase supply system.**

(57) A three-phase supply system is described which has particular application for single to three-phase converters and variable speed three-phase a.c. motor controllers. This is achieved by using a solid state six element voltage-source inverter (20) to achieve and control the dual conversion of voltage and frequency. The solid state unit is used in the single to three-phase converter and in a three-phase to three-phase converter and consists of six power switches (34), (gate turn-off switches (GTOs)) which invert the fixed d.c. voltage derived from a rectified single-phase or three-phase a.c. mains (12,82) to provide a required symmetrical three-phase output supply (22). The use of solid state elements enables the unit to be controlled from a processing unit (54) which can be programmed and set so that the output voltage and frequency is carefully controlled to meet supply requirements for both the three-phase power supply and to achieve variable speed a.c. motor control.

## THREE-PHASE SUPPLY SYSTEM

The present invention relates to a three-phase supply system for supplying a three-phase symmetrical a.c. voltage, and in particular, relates to a single to three-phase inverter and to a three-phase to three-phase converter using a solid state voltage-source inverter to provide a three-phase output.

Existing single to three-phase converters provide an output voltage which is limited to about 230 volts and consequently, output power is limited to around 5 kilowatts. Such existing converters use transistors or thyristors which are more difficult to turn off and which require more control components resulting in a larger space and bulkier structure. It is desirable to provide a single to three-phase converter which has a useful output voltage substantially greater than 230 volts, that is, of the order of around 400 volts with higher average current handling, in a power supply in the range of around 18 kilowatts.

Furthermore, existing variable a.c. speed motor control units for induction motors have problems with heat effects in the motor. Heat is produced because of the slow speed and harmonics contained in the supply and this heat can damage the bearing and insulation of the motor resulting in a shorter motor life. In addition, such existing units do not provide sufficient starting torque because of the low voltage at low frequency. Therefore, voltage boosting is required at low frequency to produce higher start-up torque characteristics. Such voltage boosting is generally inflexible and difficult to control. In addition, it is desirable to achieve continuously variable speed in a three-phase a.c. induction motor and therefore it is necessary to vary the supply frequency, and to maintain constant motor flux, to vary the supply voltage linearly with the changing frequency. This is difficult to achieve with existing units.

An object of the present invention is to provide a three-phase supply system which obviates or mitigates the disadvantages associated with single to three-phase converters and with variable three-phase a.c. speed motor control units.

This is achieved by using a solid state six element voltage-source inverter to achieve and control the dual conversion of voltage and frequency. The solid state unit is used in the single to three-phase converter and in a three-phase to three-phase converter and consists of six power switches, (gate turn off switches (GTOs)) which invert the fixed d.c. voltage derived from a rectified single-phase or three-phase a.c. mains to provide a required symmetrical three-phase output supply. The use of solid state elements enables the unit to be controlled from a processing unit which can be programmed and set so that the output voltage and frequency are carefully controlled to meet supply requirements for both the three-phase power supply and to achieve variable speed a.c. motor control.

With regard to the single to three-phase power supply aspect, a circuit is provided which uses voltage doubling capacitors, gate turn off thyristors and a pulse width modulation chip to effect single to three-phase conversion for supplying voltages up to around 460 volts at an average current of 35 amps. This results in a power supply in the range of about 18 kilowatts.

The same basic arrangement is used for the variable speed a.c. motor controller except that the three-phase input is rectified to a d.c. supply before passing through substantially the same circuit to be inverted and controlled to give three-phase output.

According to a first aspect of the present invention there is provided a three-phase power supply system comprising:

rectifier means for receiving an a.c. input voltage and for providing a d.c. output voltage in response thereto,

d.c. voltage processing means coupled to the output of said rectifier means for processing said d.c. voltage to provide a processed d.c. output voltage,

solid state inverter output means coupled to said d.c. voltage processing means for receiving said processed d.c. output voltage and for converting said d.c. output voltage to a symmetrical three-phase output supply in response to control signals applied thereto, and

control means having a control output coupled to said solid state inverter for controlling the operation of said solid state inverter to provide said symmetrical three-phase output supply.

Preferably, said rectifier means is a single-phase rectifier and receives a single-phase a.c. input voltage and rectifies said a.c. input voltage to said d.c. output voltage. Alternatively, said rectifier means is a three-phase rectifier for receiving a three-phase a.c. input voltage and for rectifying said three-phase input voltage to said d.c. output voltage.

Preferably also, said d.c. voltage processing means is a d.c. voltage amplification means which is provided by a capacitive voltage doubling circuit for handling high d.c. voltage which effectively doubles the rectified d.c. voltage for use with a single-phase to three-phase voltage convertor.

Alternatively, said d.c. voltage processing means is a filtering means for smoothing said d.c. voltage for use with a three-phase to three-phase convertor..

Preferably also, said solid state inverter output means consists of a circuit of six gate turn-off power switches which invert the fixed d.c. voltage derived from the rectified single or three-phase supply to provide the required three-phase output. Conveniently, the power switches are gate turn-off thyristors. Alternatively the if the power switches are high power MOSFETS.

Preferably also, the control means is a programmable semi-conductor chip which provides pulse width modulation (PWM) control of the gate turn-off thyristors. The chip is programmable and voltage and frequency are independently controllable so that torque boosting can be achieved. This is particularly advantageous in the case of the variable speed a.c. motor control.

Accordingly in another aspect of the invention there is provided a single to three-phase converter comprising:

rectifier means for receiving single-phase a.c. input voltage and for providing d.c. output voltage in response thereto;

d.c. voltage amplification means coupled to the output of rectifier means for amplifying said rectified d.c. voltage to provide an amplified d.c. output voltage;

solid state inverter output means coupled to said d.c. voltage amplification means for receiving said amplified d.c. output voltage and for converting said d.c. voltage to a symmetrical three-phase a.c. output in response to control signals applied thereto, and

control means having a control output coupled to said solid state inverter for controlling the operation of said solid state inverter to provide said three-phase output.

In yet another aspect of the invention there is provided a variable speed three-phase a.c. motor controller comprising:

three-phase rectifier means for receiving a three-phase a.c. input voltage and for providing a single d.c. output voltage in response thereto,

filter means for filtering said rectified d.c. voltage,

solid state inverter output means coupled to said d.c. voltage filter means for receiving said filtered d.c. output voltage and for converting said d.c. voltage to a symmetrical three-phase a.c. output in response to control signals applied thereto, and

control means having a control output coupled to said solid state inverter for controlling the operation of said solid state inverter to provide said three-phase output.

Preferably said control means is a programmable pulse width modulation chip which sends control signals to the solid state inverter output means such that the voltage and frequency are controlled independently to provide torque boosting. Preferably also said filter means is a capacitive arrangement.

These and other aspects of the invention will become apparent from the following description when taken in combination with the accompanying drawings in which:-

Fig. 1 is a circuit diagram of an embodiment of a single to three-phase convertor in accordance with the invention;

Fig. 2 is an enlarged and more detailed diagram of a solid state inverter as shown in Fig. 1;

Fig. 3 is a block diagram of a programmable pulse width modulation chip and external control components which is used as a control unit for controlling the switching of the gate turn-off thyristor shown in Figs. 1 and 2;

Fig. 4 depicts fifteen-pulse sinusoidal pulse width modulated waveforms from the outputs of the inverter, the phase voltage and for the line voltage, and

Fig. 5 depicts a circuit diagram similar to Fig. 1 but for a three-phase to three-phase variable speed a.c. motor control circuit.

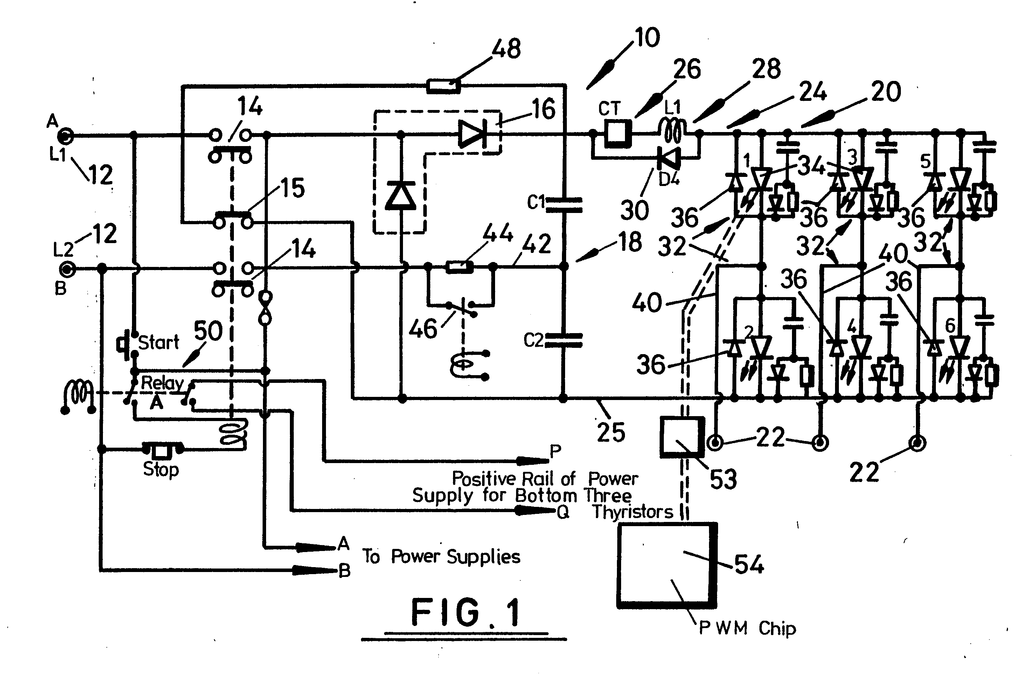

Reference is first made to Fig. 1 of the drawings which depicts a circuit for providing an amplified three-phase supply from relatively low voltage single a.c. supply which is fed via terminals 12 through switches 14 and a rectifier circuit 16 to a d.c. voltage processing means in the form of voltage doubling circuit generally indicated by reference numeral 18. The rectifier circuit rectifies a single-phase input to a d.c. voltage which is then doubled via the voltage doubling circuit 18. The voltage doubling circuit consists of two 3000 microfarad capacitors to effectively double the voltage from around 350 to around 700 volts and the capacitors are rated at 400 volts. The doubled voltage is passed to a six element voltage-source inverter generally indicated by reference numeral 20 for inverting the rectified and doubled d.c. voltage to a three-phase output from output terminals 22 for providing a symmetrical three-phase supply of around 460 volts line voltage as will be described.

In the power rail 24 a current transducer 26 is connected in series with an inductor 28. The current transducer is a hall effect device and is powered from a plus and minus 15 volt d.c. supply from a control board and is for detecting the input current to the inverter. The arrangement is such that a current limit can be set to protect the unit so that if the current is detected greater than a predetermined value the unit will trip. An inductor 28 limits the rate of rise of the current (dI/dt) to the gate turn-off thyristors and also ensures that any mains pollution is kept at a reasonable level. A diode 30 is connected across the current transducer and the inductor to provide a discharge path for energy stored in the inductor 28 during periods when all thyristors are switched off.

It will be appreciated that each gate turn-off thyristor 34 is a three terminal semi-conductor switch which combines the most desirable characteristics of a conventional thyristor with those of a bipolar transistor. Like a transistor the gate turn-off thyristor can be switched on and off by a low power gate drive and, like a thyristor, it can pass high forward currents when turned on and block high forward voltages (up to about 1500 volts at power levels around 11 kilowatts) when turned off. It is the high forward blocking capability and the simplicity of the drive which make the gate turn-off thyristor desirable for use in power control equipment.

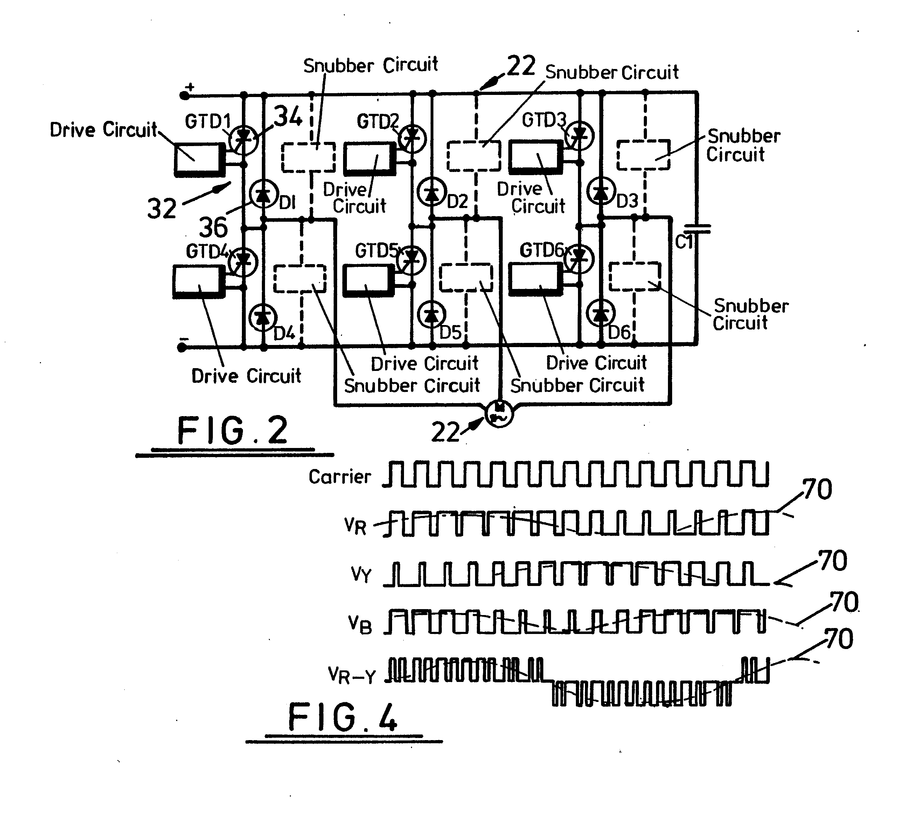

The inverter circuit 20 may be best explained with reference to Fig. 2 and it depicts a unit of six power switches generally indicated by reference numeral 32 and each power switch contains a gate turn-off thyristor 34 (eg Type GG 90 AEG Power Semiconductors) Warstein, Belicke, West Germany for 20 Amp rating) other AEG types can be selected depending on the rating using the AEG Preliminary Data Manual. (Publication No. A153.5.200/0586DE/EN)

Each gate turn-off thyristor is connected in parallel with an integral reverse recovery, or flywheel, diode, the function of which is to carry any reactive and regenerative currents from the load to the amplified d.c. voltage supply. Also connected in parallel with each gate turn-off thyristor 34 is a snubber circuit generally indicated by reference numeral 38 which is effectively an R.C. protection network for limiting the rate of rise of reapplied voltage across the thyristors 34 to around 800V/microsecond at 40 amps after the thyristors have been turned off. Therefore it effectively functions as a damping and a protection network.

Each phase output line 40 is taken from a position midway between opposed pair of switches 32 to provide the output phases 22.

Also present in the circuit in the single-phase input line 42 is a charge resistor 44 and relay 46. As soon as the supply is turned on the capacitors C1 and C2 in the capacitive doubling circuit 18 are charged via resistor 44. After a short time relay 46 closes and R2 is shorted out and accordingly the relay 46 is rated to carry the full load d.c. link current. In addition, a discharge resistor 48 is provided in line 24 which is coupled via a switch 15 to rail 25 to ensure that at switch off the capacitors C1 and C2 in the voltage doubling circuit 18 discharge through R1 to ensure that the equipment is safely de-energized. Power from rails 24 and 42 is taken through terminals A and B to power supplies for the control unit for the electronics and other hardware and similarly a switch and relay arrangement 50 is provided to provide a positive rail of power supply for controlling the positive electronic supply rial (not shown) for the bottom three thyristors depicted in Fig. 1.

Each gate turn-off thyristor 34 is coupled via conductors 52 and isolation means 53 to a control unit in the form of a solid state programmable pulse width modulation chip, generally indicated by reference numeral 54, of which one connection is shown in broken lines for ease of clarity. It will be appreciated that all other thyristors are similarly connected to the chip 54 via said isolation means 53.

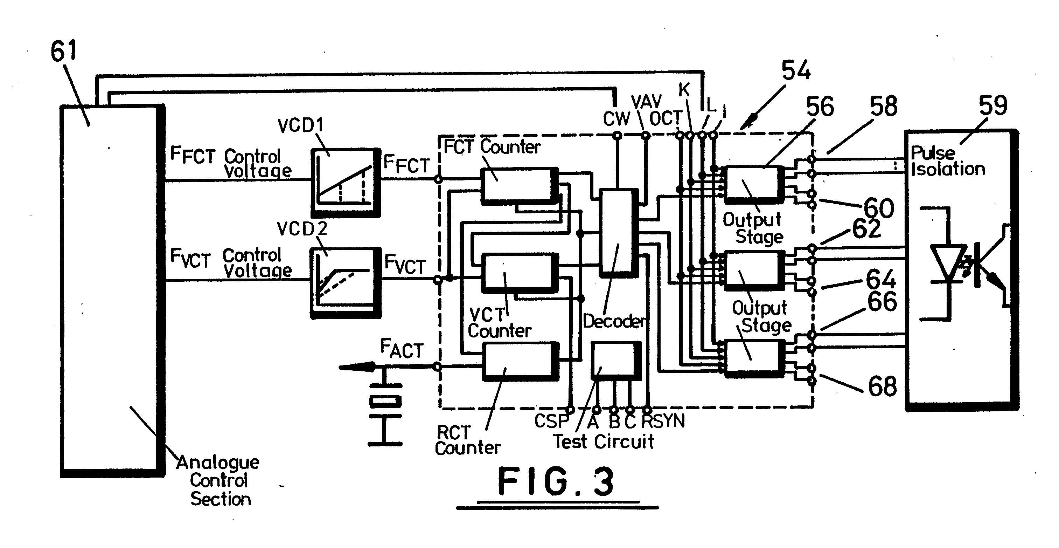

The chip 54 is shown in better detail in Fig. 3 which is a block diagram of the components and external control circuitry. The chip is type HEF 4752V (Mullard) provided in Technical Publication No. M82-0015, Mullard Limited, Mullard House, Torrington Place, London, U.K., WC1E 7HD. The chip 54 has three output stages 56 which provides in total six main drive outputs arranged in complementary pairs 58 to 68 which are coupled via pulse isolation means 59 to the respective conductors or the thyristors 34. The second letter in the diagram of the output ORM indicates the phase switching element i.e. in case of ORM - red. An analogue control section 61 controls the voltage to the frequency control input $^F$FCT, and to the voltage level input $^F$VCT.

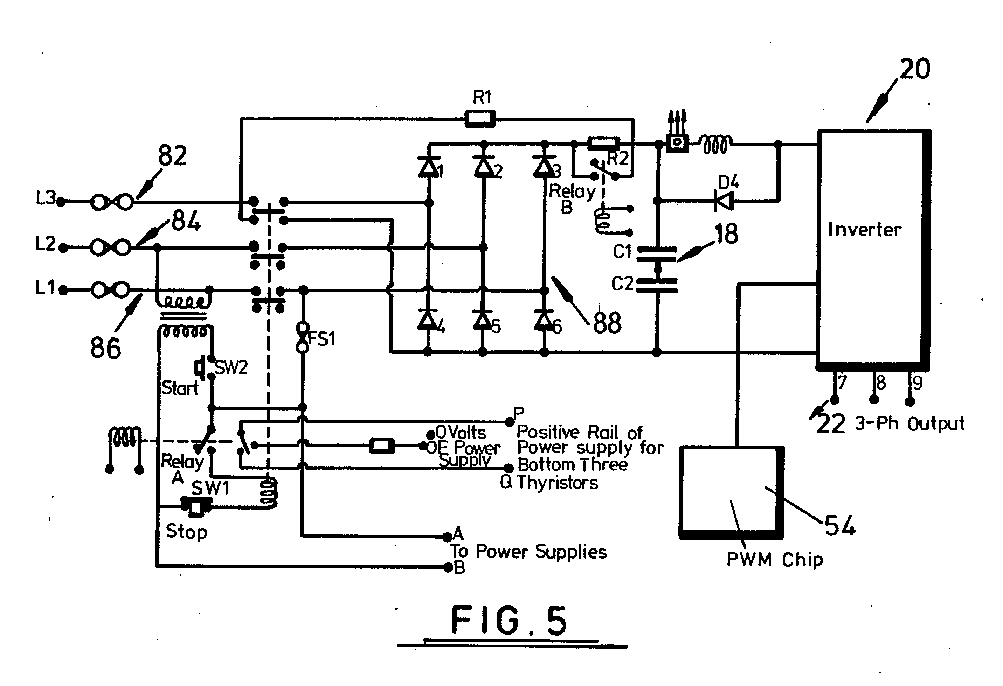

In operation a single-phase supply is supplied through terminals 12 and rectifier 16 to voltage doubling circuit 18 where it is doubled by a capacitor C1 and C2 is then fed via circuit 26 and 28 to the inverter circuit 20. The rectified and amplified d.c. voltage is applied to each of the switches 32 and the control chip 24 switches the thyristors 34 by providing gating pulses to effectively pulse width modulate the voltage supply from each switch element. Because the integrated circuit is digital, repetition frequency of the pulse width modulation system (switching frequency), is always an exact multiple of the inverter output frequency which results in excellent phase and voltage balance and consequent low noise. Accordingly the switching control of the inverter 20 produces pulsed output waveforms as best seen in Fig. 4 and are depicted as the red, yellow and blue phases $V_R$, $V_Y$ and $V_B$. The output line voltage $V_{R-Y}$ is also depicted in Fig. 4 and it will be seen that the voltages are made up of a series of modulated pulses. Each output is fed to an inductive load, for example heaters or a.c. motors so that smoothing is effected by the load so that the resulting voltage applied to the load appears substantially continuous. This is depicted by broken lines 70 which show the effect of the waveforms when fed into an inductive load.

Reference is now made to Fig. 5 of the drawings which depicts a circuit for providing variable a.c. motor control for inductive motors in which like numerals refer to like parts as shown in Fig. 1. It will be seen that each of three phases L1, L2 and L3 is fed through lines 82,84 and 86 to a three-phase rectifier 88 which rectifies the three phases to provide a single d.c. output voltage which is then smoothed in d.c. voltage processing means in the form of a capacitive smoothing circuit 18 and is then passed to the six element voltage-source inverter 20 via the current transformer and inductor. The remainder of the circuitry is identical to that shown in Fig. 1 and the gate turn-off thyristors 34 in the inverter 20 are coupled to the programmable chip 54 as aforedescribed. The operation is substantially the same insofar as the circuit is concerned in that three-phases are rectified to a single d.c. voltage which is then effectively smoothed in circuit 18 and passed to the inverter where it is modulated under control of chip 54 to provide a symmetrical three-phase output on output terminals 22. The waveforms are similar to those shown in Fig. 4 and when applied to an inductive motor are effectively smoothed as shown by waveforms 70.

However, the chip 54 is controlled in a different manner such that the voltage and frequency are controlled independently to provide torque boosting. This is achieved by using the VCT input 17 on the chip which is the voltage clock input and this varies the level of the average inverter output voltage by varying the modulation depth of the carrier. Thus by changing the VCT clock input level the motor flux is changed to provide a higher start-up torque at low frequency effectively resulting in voltage boosting and accordingly the problems of heat and harmonic distortion with the supply are minimised with this arrangement.

It will be appreciated that various modifications may be made to the embodiment hereinbefore described without departing from the scope of the invention. For example, although gate turn-off thyristors are used any other suitable gate turn-off switch, e.g. MOSFET can be used and also the HEF 4752 pulse width modulation chip can be replaced by any other suitable chip. The specific arrangement of voltage doubling circuit using the capacitors may also be altered, although it will be appreciated that this is a simple and effective arrangement and provides a sufficiently high power rating. In addition, any other suitable I.C. may be used which provides three complementary pairs of output drive waveforms which when applied to a three-phase bridge inverter produces a symmetrical three-phase output and so that the average voltage difference between any two of the three phases varies sinusoidally. Components disclosed herein may be replaced by other suitable components which have a similar function.

Advantages of the invention are that in the case of the single to three-phase converter the output when fed to an inductive load is smoothed so that the resulting voltage applied to the load is substantially continuous. In addition, a voltage from a single-phase supply of around 230 volts can be provided up to around 460 volts at around 35 amps and which can be used to drive various types of three-phase equipment such as heaters and motors. The use of solid state components provides a unit which requires minimal space and the use of solid state circuitry also permits better and more flexible control of the apparatus. The variable speed a.c. motor control circuit is advantageous in providing higher start-up torque characteristics at low frequency and providing voltage boosting and accordingly the problems of heat and harmonic distortion associated with existing speed control units are minimised. Also the soft starting controls motor acceleration and limits starting current and the motor can be braked (decelerated) to rest instead of being allowed to freewheel. In addition, power frequencies up to 150Hz can be generated for providing constant power, for use on machine tools for example.

**Claims**

1. A three-phase power supply system (10) comprising,

rectifier means (16) for receiving an a.c. input voltage and for providing a d.c. output voltage in response thereto,

d.c. voltage processing means (18) coupled to the output of said rectifier means for processing said d.c. voltage to provide a processed d.c. output voltage,

solid state inverter output means (20) coupled to said d.c. voltage processing means (10) for receiving said processed d.c. output voltage and for converting said d.c. output voltage to a symmetrical three-phase output supply in response to control signals applied thereto, and

control means (54) having a control output coupled to said solid state inverter for controlling the operation of said solid state inverter to provide said symmetrical three-phase output supply.

2. A three-phase power supply system as claimed in claim 1 wherein said rectifier means (16) is a single-phase rectifier and receives a single-phase a.c. input voltage and rectifies said a.c. input voltage to said d.c. output voltage.

3. A three-phase power supply system as claimed in claim 1 wherein said rectifier means is a three-phase rectifier (88) for receiving a three-phase a.c. input voltage and for rectifying said three-phase input voltage to said d.c. output voltage.

4. A three-phase power supply system as claimed in claim 1 wherein said d.c. voltage processing means (18) is a d.c. voltage amplification means which is provided by a capacitive voltage doubling circuit for handling high d.c. voltage.

5. A three-phase power supply system as claimed in claim 1 wherein alternatively said d.c. voltage processing means is a filtering means for smoothing said d.c. voltage for use with a three-phase to three-phase converter.

6. A three-phase power supply system as claimed in claim 1 wherein said solid state inverter output means consists of a circuit of six gate turn-off power switches (34) which invert the fixed d.c. voltage derived from the rectified single or three-phase supply to provide the required three-phase output.

7. A three-phase power supply system as claimed in claim 6 wherein the power switches are gate turn-off thyristors.

8. A three-phase power supply system as claimed in claim 6 wherein the power switches are high power MOSFETS.

9. A three-phase power supply system as claimed in claim 1 wherein the control means (54) is a programmable semi-conductor chip which provides pulse width modulation control of the gate turn-off thyristors (34).

10. A three-phase power supply system as claimed in claim 9 wherein the chip is programmable and voltage and frequency are independently controllable so that torque boosting can be achieved.

11. A single to three-phase converter comprising:

rectifier means (16) for receiving single-phase a.c. input voltage and for providing d.c. output voltage in response thereto;

d.c. voltage amplification means (18) coupled to the output of rectifier means (16) for amplifying said rectified d.c. voltage to provide an amplified d.c. output voltage;

solid state inverter output means (20) coupled to said d.c. voltage amplification means (18) for receiving said amplified d.c. output voltage and for converting said d.c. voltage to a symmetrical three-phase a.c. output in response to control signals applied thereto, and

control means (54) having a control output coupled to said solid state inverter for controlling the operation of said solid state inverter to provide said three-phase output.

12. A variable speed three-phase a.c. motor controller comprising:

three-phase rectifier means (88) for receiving a three-phase a.c. input voltage and for providing a single d.c. output voltage in response thereto;

filter means (18) for filtering said rectified d.c. voltage;

solid state inverter output means (20) coupled to said d.c. voltage filter means (18) for receiving said filtered d.c. output voltage and for converting said d.c. voltage to a symmetrical three-phase a.c. output in response to control signals applied thereto, and

control means (54) having a control output coupled to said solid state inverter for controlling the operation of said solid state inverter to provide said three-phase output.

13. A variable speed three-phase a.c. motor controller as claimed in claim 11 wherein said control means (54) is a programmable pulse width modulation chip which sends control signals to the solid state inverter output means such that the voltage and frequency are controlled independently to provide torque boosting.

14. A variable speed three-phase a.c. motor controller as claimed in claim 11 wherein said filter means is a capacitive arrangement.

FIG. 1

PWM Chip

Positive Rail of Power Supply for Bottom Three Thyristors

To Power Supplies

FIG.2

FIG.4

FIG.3

FIG. 5

0 272 776